# EUROPEAN PATENT APPLICATION

(11) **EP 4 803 989 A1**
(43) Date of publication of application: **09.09.2026**
(21) Application number: 24884763.4
(22) Date of filing: 29.10.2024
(51) Int. Cl.: G06F 3/0481, G06F 3/0484

(54) **INFORMATION DISPLAY METHOD AND APPARATUS, DEVICE, AND STORAGE MEDIUM**

(30) Priority: 31.10.2023 CN 202311435755
(71) Applicant: Beijing Zitiao Network Technology Co., Ltd., Beijing 100190 (CN)
(72) Inventor: LIU, Fujia, Beijing 100028 (CN); WANG, Ruifeng, Beijing 100028 (CN)
(74) Representative: Grünecker Patent- und Rechtsanwälte PartG mbB
(86) International application number: PCT/CN2024/128293
(87) International publication number: WO 2025/092761

(57) **Abstract**

The disclosure provides a method, apparatus, device and storage medium of information presentation, which relates to the technical field of computers. The method includes: presenting a preset information set on a preset interface, where the preset information set includes preview information of at least one preset media content; presenting, in response to a first preset media content which first preview information in the preset information set belongs to being associated with interaction information satisfying a preset condition, first prompt information corresponding to the first preset media content in the first preview information, where the first prompt information is associated with the interaction information that is associated with the first preset media content.

## Description

### CROSS-REFERENCE

This application claims priority of Chinese Patent Application No. 202311435755.X, filed on October 31, 2023, and entitled "METHOD, APPARATUS, DEVICE AND STORAGE MEDIUM OF INFORMATION PRESENTATION", the entire content of which is incorporated herein by reference.

### FIELD

Embodiments of the present disclosure relates to the technical field of computers, in particular to a method, apparatus, device and storage medium of information presentation.

### BACKGROUND

With the continuous development of internet technologies, users may browse various media content through the internet, and different users may share their own media works with each other using the form of posting media content such as videos, and users may also interact with each other based on the media works.

### SUMMARY

Embodiments of the present disclosure provides a method, apparatus, device and storage medium of information presentation, which may optimize an existing information presentation scheme.

According to a first aspect, embodiments of the present disclosure provide a method of information presentation, including: presenting a preset information set on a preset interface, wherein the preset information set comprises preview information of at least one preset media content; presenting, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

According to a second aspect, embodiments of the present disclosure further provide an apparatus of information presentation, including: an information set presentation module configured to present a preset information set on a preset interface, wherein the preset information set comprises preview information of at least one preset media content; a prompt information presentation module configured to present, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

In a third aspect, embodiments of the present disclosure further provide an electronic device, and the electronic device includes: one or more processors; a storage device configured to store one or more programs, the one or more programs, when executed by the one or more processors, causing the one or more processors to implement the method of information presentation provided in embodiments of the present disclosure.

In a fourth aspect, embodiments of the present disclosure further provide a storage medium comprising computer-executable instructions that, when executed by a computer processor, are configured to perform the method of information presentation provided in embodiments of the present disclosure.

### BRIEF DESCRIPTION OF DRAWINGS

The above and other features, advantages, and aspects of various embodiments of the present disclosure will become more apparent in conjunction with the accompanying drawings and with reference to the following detailed description. Throughout the drawings, the same or similar reference numbers refer to the same or similar elements. It should be understood that the drawings are schematic, and components and elements are not necessarily drawn to scale.
FIG. 1 is a schematic flowchart of a method of information presentation provided by embodiments of the present disclosure;
FIG. 2 is a schematic diagram of an interface provided by embodiments of the present disclosure;
FIG. 3 is a schematic diagram of another interface provided by embodiments of the present disclosure;
FIG. 4 is a schematic flowchart of another method of information presentation provided by embodiments of the present disclosure;
FIG. 5 is a schematic diagram of interface interaction provided by embodiments of the present disclosure;
FIG. 6 is a schematic flowchart of yet another method of information presentation provided by embodiments of the present disclosure;
FIG. 7 is a schematic diagram of another interface interaction provided by embodiments of the present disclosure;
FIG. 8 is a schematic diagram of yet another interface interaction provided by embodiments of the present disclosure;
FIG. 9 is a schematic diagram of a structure of an apparatus of information presentation provided by embodiments of the present disclosure; and
FIG. 10 is a schematic diagram of a structure of an electronic device provided by embodiments of the present disclosure.

### DETAILED DESCRIPTION

Embodiments of the present disclosure will be described in more detail below with reference to the accompanying drawings. Although certain embodiments of the present disclosure are shown in the drawings, it is to be understood that the present disclosure may be implemented in various forms, and should not be explained as limited to the embodiments set forth herein, and on the contrary, providing these embodiments is for understanding the present disclosure more clearly and complete. It should be understood that the drawings and embodiments of the present disclosure are only for example purposes and are not intended to limit the scope of the present disclosure.

It should be understood that the steps recited in method embodiments of the present disclosure may be performed in different orders, and/or in parallel. Further, the method embodiments may include additional steps and/or omit performing the illustrated steps. The scope of the present disclosure is not limited in this respect.

As used herein, the term "comprising" and its variant are opening comprising, i.e., "comprising but not limited to". The term "based on" is "at least in part based on". The term "one embodiment" means "at least one embodiment"; the term "further embodiment" means "at least one further embodiment"; the term "some embodiments" means "at least some embodiments". The relevant definitions of other terms will be given below.

It should be noted that the concepts such as "first" and "second" mentioned in the present disclosure are merely used to distinguish different apparatuses, modules, or units, and are not intended to limit the order of functions performed by the apparatuses, modules, or units or the dependency relationship between each other.

It should be noted that the modifier of "one" and "a plurality of" mentioned in the present disclosure is illustrative and not limiting, and those skilled in the art should understand that the modifier should be understood as "one or more" unless the context clearly indicates otherwise.

The names of messages or information interacted between multiple apparatuses in embodiments of the present disclosure are for illustrative purposes only and are not intended to limit the scope of such messages or information.

It can be understood that, before the technical solutions disclosed in embodiments of the present disclosure are used, the type, the usage scope, the usage scenario of personal information related to the present disclosure and the like should be notified to the user in an appropriate manner according to the relevant laws and regulations to obtain the authorization of the user.

For example, in response to receiving an active request from a user, prompt information is sent to the user to explicitly prompt the user that the requested operation will need to obtain and use the personal information of the user. Therefore, the user may autonomously select whether to provide personal information to software or hardware such as electronic device, application program, server or storage medium that performing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and the process of obtaining user authorization is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the obtaining or using of the data) should follow the requirements of the corresponding laws and regulations and related rules.

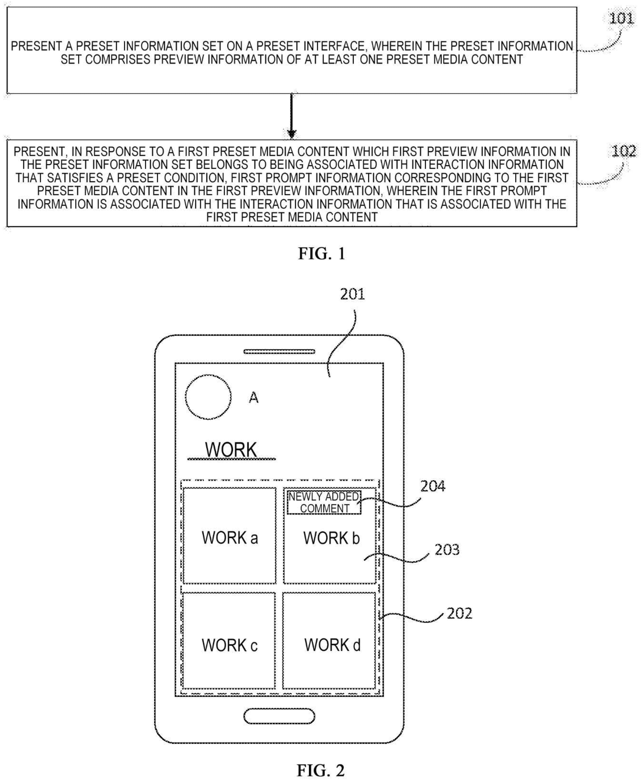

FIG. 1 is a schematic flowchart of a method of information presentation provided by embodiments of the present disclosure. Embodiments of the present disclosure is applicable for the situation of information presentation. The method may be performed by an apparatus of information presentation. The apparatus may be implemented in a form of software and/or hardware. Optionally, the method is implemented by an electronic device. The electronic device may be a mobile terminal such as a mobile phone, a smart watch, a tablet computer, and a personal digital assistant, or may be a device such as a personal computer (PC) terminal or a server.

As shown in FIG. 1, the method includes:
step 101, presenting a preset information set on a preset interface. The preset information set includes preview information of at least one preset media content.

In embodiments of the present disclosure, the preset interface may be an interface in a preset application program, and the preset application program may provide a media content presentation function, and may further provide a media content posting function, and the specific type is not limited, and may be installed in the electronic device. The preset interface may specifically be an interface such as a personal homepage or a work list page, for example, may be an interface such as a personal homepage or a work list page of the current user, or may be an interface such as a personal homepage or a work list page of a target user which is different from the current user and viewed by the current user.

For example, the preset media content may be content provided by a preset application program, or may be content posted by a user through a preset application program. The specific form of the preset media content is not limited, and may include text, a picture, an audio or a video, or the like. Optionally, the preset media content may include a preset media work, such as a video work, a graphic and text work, or a music work, or the like.

For example, the preview information of the preset media content may include at least one of information such as a name of the preset media content and an associated image, and the associated image may be, for example, a cover image. The at least one preset media content may be posted by the same user, and the same user may be a current user or a target user different from the current user. If the same user is the current user, it may be considered that the current user views the preview information of the preset media content posted by himself in the preset interface; and if it is posted by the target user, it may be considered that the current user views the preview information of the preset media content posted by others in the preset interface.

For example, the preset information set includes preview information of at least one preset media content, and the preview information and the preset media content are in a one-to-one relationship, that is, the preset information set includes at least one preview information. The preset information set may be a set of preview information of all preset media content or part of preset media content that can be presented in the preset interface. If it is part of the preset media content, for example, the set of preview information corresponding to the preset media content whose ranking is less than or equal to the preset sequence number may be determined as the preset information set according to the presentation ordering of the preset media content in the preset interface, for example, the first 6 preview information presented are determined as the preset information set. Optionally, the preset sequence number may be determined according to a maximum number of preview information initially presented on the preset interface. For example, when entering the preset interface, 6 preview information are presented, and the set formed by the 6 preview information is recorded as a preset information set.

Step 102: in response to a first preset media content which first preview information in the preset information set belongs to being associated with interaction information satisfying a preset condition, first prompt information corresponding to the first preset media content is presented in the first preview information. The first prompt information is associated with the interaction information that is associated with the first preset media content.

For example, the user may interact based on the preset media content, the interaction information includes information generated at the interaction process associated with the preset content, and the specific interaction manner is not limited. For example, the interaction manner may be that the user posts the comment for the preset media content, that is, the interaction information may include the comment information.

In the related art, the user may view the interaction information at an interaction information presentation interface (for example, a comment panel) corresponding to the preset media content, and the interaction information presentation interface generally needs to switch in a manner such as a trigger control in a content presentation interface (which may be understood as a detail interface) corresponding to the preset media content. When the user views the preview information of the preset media content at the preset interface, the related condition of the interaction information may not be obtained.

In embodiments of the present disclosure, the preset condition may be set according to the actual situation, and in case that the preset media content which the first preview information in the preset information set belongs to is associated with the interaction information satisfying the preset condition, the first prompt information corresponding to the first preset media content is presented in the first preview information, so that the user may quickly know whether the preset media content which the preview information belongs to is associated with the interaction information satisfying the preset condition or not according to the first prompt information.

For example, the preset condition may be determined based on at least one of a post time of the interaction information, an association relationship between the interaction information and the current user, and an attribute feature of the interaction information. The specific number of the first preview information is not limited.

Optionally, being associated with the interaction information satisfying the preset condition includes: being associated with the newly added interaction information, where the newly added interaction information includes added interaction information when the current user views the interaction information of the first preset media content most recently. Specifically, the newly added interaction information may be interaction information added after the current user views the interaction information presentation interface most recently. Therefore, the user may know, at the preset interface, which preset media works have newly added interaction information.

Optionally, being associated with the interaction information satisfying the preset condition includes: being associated with interaction information having an attribute feature satisfying a preset attribute requirement. The attribute feature may be, for example, a statistical feature of the interaction information, for example, the number of interaction information. The preset attribute requirement may be, for example, the number being greater than or equal to a preset number threshold, or a ranking number being greater than a preset ranking threshold. Therefore, the user may know, at the preset interface, which preset media content has interaction information satisfying the preset attribute requirement, for example, preset media content with more accumulated comments number.

Optionally, being associated with the interaction information satisfying the preset condition includes: being associated with newly added interaction information having an attribute feature satisfying a preset attribute requirement. Therefore, the above two conditions are combined, and the related condition of the interaction information of the preset media content may be more accurately understood. For example, in the preset information set, the preview information with the maximum added comments associated with the preset media content belongs to is the first preview information, and the first prompt information is presented in the first preview information.

For example, the first prompt information may be understood as information prompting that the first preset media content belonging to the first preview information which the current user belongs to is associated with the interaction information satisfying the preset condition. The first prompt information is associated with the interaction information associated with the first preset media content, and the specific association manner is not limited.

Optionally, the first prompt information includes indication information for indicating that the first preset media content is associated with the interaction information satisfying the preset condition. Therefore, the user may be helped to intuitively and accurately know the meaning of the first prompt information. The indication information may be specifically information such as text information or a graphic identifier. As an example of interaction information being comment information, the indication information may be, for example, "newly added comment".

Optionally, the first prompt information includes attribute feature information of the interaction information satisfying the preset condition and is associated with the first preset media content. Therefore, the user may quickly know the attribute feature information of the interaction information satisfying the preset condition. For example, the attribute feature information may be a statistical feature value, and as an example of interaction information being comment information, the attribute feature information may be value of the number of newly added comments.

FIG. 2 is a schematic diagram of an interface provided by embodiments of the present disclosure, as shown in FIG. 2, a preset information set 202 is presented on a preset interface 201 (for example, a personal homepage of the user A), and the preset information set 202 includes a work cover (preview information) of 4 media works (preset media content), and if the work b is associated with comment information (interaction information) satisfying a preset condition, the work b is determined as the first preview media content, the corresponding work cover is determined as the first preview information 203, and the preset condition may be, for example, the number of newly added comments is greater than a preset number threshold, and the first prompt information 204 is presented in the first preview information 203, as "newly added comment" shown in FIG. 2.

The method of information presentation provided by embodiments of the present disclosure presents the preset information set on the preset interface, the preset information set including preview information of at least one preset media content, and presents, in response to the first preset media content which first preview information in the preset information set belongs to being associated with interaction information satisfying a preset condition, first prompt information corresponding to the first preset media content in the first preview information. The first prompt information is associated with the interaction information that is associated with the first preset media content. By adopting the technical scheme, when the user views the preset information set, the user may quickly know whether the preset media content which the preview information belongs to is associated with the interaction information satisfying the preset condition or not by viewing the prompt information presented in the preview information, so that the user operation is reduced.

In some embodiments, presenting the first prompt information corresponding to the first preset media content in the first preview information includes: presenting first prompt information corresponding to the first preset media content at a target relative position in the first preview information, where preset information of a second preset media content which second preview information belongs to is presented at the target relative position in the second preview information, the second preview information including preview information in the preset information set excluding the first preview information. Therefore, the target relative position may be reused to satisfy the information presentation requirements satisfying different conditions.

For example, the preset information may be determined according to an actual situation, and may be attribute feature information of the preset media content, for example, a statistical feature value such as an accumulated view count or the like. The target relative position is not specifically limited, for example, which may be a top-left corner, a bottom-left corner, a top-right corner, or a bottom-right corner, or the like. The preset information may be determined according to an actual situation. Optionally, the target relative position may be determined according to the presentation position of the preset information, or the preset information may be determined according to the target relative position. For example, in the related art, the bottom-left corner of the work cover may show the accumulated view count of the media work, and the bottom-left corner may be determined as the target relative position, and the accumulated view count may be determined as the preset information.

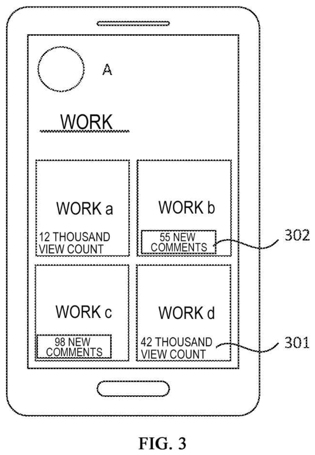

FIG. 3 is a schematic diagram of another interface provided by embodiments of the present disclosure, as shown in FIG. 3, it is assumed that the preset condition is that ranking of the number of newly added comments is greater than or equal to 2, and newly added comments of the work A, the work B, the work C, and the work D are 10, 55, 98, and 7 sequentially, and the ranking of the number of newly added comments which are at the first two place are the work B and the work C, then the work B and the work C are first preset media content, and the work A and the work D are second preset media content, and the target relative position is a bottom-left corner, then the preset information 301 is presented at the bottom-left corner of the work cover of the work A and the work D, the preset information 301 is specifically a view count, and first prompt information 302 is presented at a bottom-left corner of the work cover of the work B and the work C, and the first prompt information 302 is the number of newly added comments.

For example, if the user views the interaction information of the first preset media content after viewing the first prompt information, when the preset interface is presented again, the first preset media content may no longer be associated with the interaction information satisfying the preset condition, and the presentation of the corresponding preset information may be resumed at the target relative position in the corresponding preview information. As an example in FIG. 3, if the user views the comment information of the work B, it may be considered that the work B does not currently have the unviewed comment information, and the "55 new comments" may be replaced with the view count. Optionally, the target prompt information may be displayed at the preset relative position, so as to prompt that the preset media content was associated with the interaction information satisfying the preset condition within the latest preset time duration, and a preset relative position is different from the preset relative position, for example, the top-left corner, and the target prompt information may be, for example, a text prompt such as "heat discussion".

In some embodiments, after presenting the first prompt information corresponding to the first preset media content in the first preview information, the method further includes: presenting, in response to a triggering operation on the first preview information, a content presentation interface of the first preset media content; presenting second prompt information in the content presentation interface. The second prompt information is to prompt a current user to view the interaction information satisfying the preset condition associated with the first preset media content. Therefore, after the user enters the content presentation interface of the first preset media content, the second prompt information may be viewed, and the second prompt information is used to prompt the current user to view the interaction information satisfying the preset condition associated with the first preset media content..

The content, the presentation position in the content presentation interface, and the presentation style of the second prompt information are not limited. Optionally, the second prompt information and the first prompt information may be the same or different. For example, the second prompt information includes indication information for indicating that the first preset media content is associated with the interaction information satisfying the preset condition, and/or the second prompt information includes attribute information of the interaction information satisfying the preset condition and is associated with the first preset media content.

In some embodiments, a preset interaction control is presented in the content presentation interface to trigger presenting of a presentation interface of interaction information, where presenting the second prompt information in the content presentation interface includes: presenting second prompt information in an associated area of the preset interaction control. Therefore, the second prompt information is presented in the associated area of the preset interaction control for triggering the presenting of the presentation interface of interaction information, and the prompt effect of the second prompt information may be enhanced.

For example, the preset interaction control may be determined according to the type of the interaction information, and when the interaction information is the comment information, the preset interaction control may be a comment control, for example, a comment button. The associated area may be, for example, a left side, a top side, a bottom side, a right side, or the like of the presentation area where the preset interaction control is located, or may be a top-right corner or the like of the presentation area where the preset interaction control is located, and the associated area may intersect or separate from the presentation area where the preset interaction control is located, which is not specifically limited.

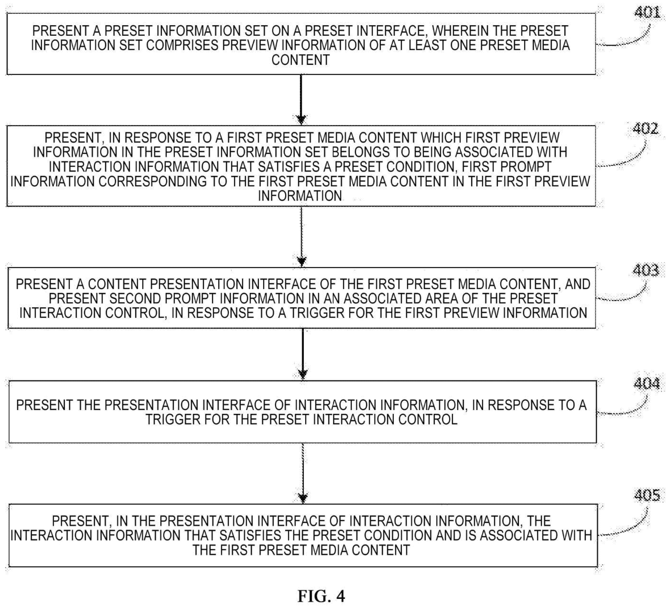

FIG. 4 is a schematic flowchart of another method of information presentation provided by embodiments of the present disclosure, and embodiments of the present disclosure are based on each optional solutions of above embodiments, to further optimize the interaction related to the second prompt information, specifically, the method includes the following steps:
Step 401: a preset information set is presented on a preset interface, where the preset information set includes preview information of at least one preset media content.
Step 402: in response to a first preset media content which first preview information in the preset information set belongs to being associated with interaction information satisfying a preset condition, first prompt information corresponding to the first preset media content is presented in the first preview information.

The interaction information associated with the preset condition and satisfying the preset condition may specifically be newly added interaction information associated with the attribute feature and satisfying the preset attribute requirement. The first prompt information includes attribute feature information of the interaction information whose attribute feature associated with the first preset media content satisfying the preset attribute requirement.

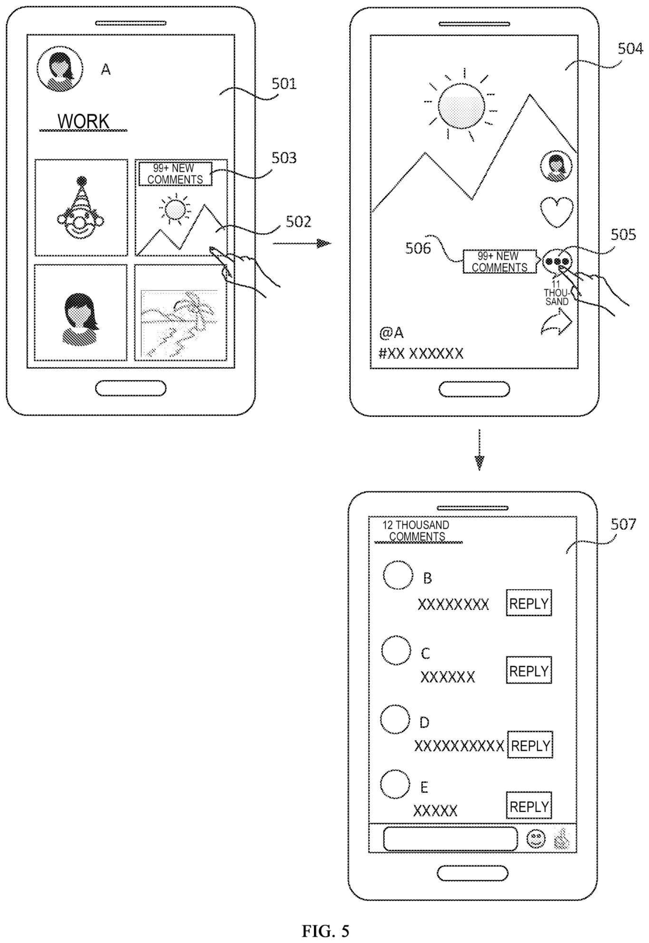

FIG. 5 is a schematic diagram of an interface interaction provided by embodiments of the present disclosure, assuming that a current user is a user A, and a preset information set is presented on a personal homepage 501 (preset interface) of the user A, and the preset information set includes a work cover (preview information) of 4 media works (preset media content), and the preset condition may be, for example, the ranking of the number of newly added comments may be the first, and if the number of newly added comment information (interaction information) associated with the second work is the largest, the second work is determined as the first preset media content, and the corresponding work cover is determined as the first preview information 502, and first prompt information 503 is presented in the first preview information 502, as "99 + newly added comments" shown in FIG. 5.

Step 403: a content presentation interface of the first preset media content is presented, and second prompt information is presented in an associated area of the preset interaction control, in response to a triggering operation on the first preview information.

As shown in FIG. 5, after the user clicks the first preview information 502, a content presentation interface 504 of the first preset media content is presented, for example, a video detail page, and details of the first preset media content may be presented in the content presentation interface 504, for example, a video work is played. A preset interaction control 505, such as a comment button, is presented in the content presentation interface 504, and second prompt information 506 is presented in an associated area of the preset interaction control 505, where the associated area may be a left side of the preset interaction control 505, and the presentation style may be a bubble style. The content of the second prompt information may be the same as the content of the first prompt information.

Optionally, the associated area may further be a top-right corner of the preset interaction control. The content of the second prompt information may be different from the content of the first prompt information, for example, may be a number representing the number of newly added comments. Optionally, the second prompt information may further be a red point identifier.

Step 404: the presentation interface of interaction information is presented, in response to a triggering operation on the preset interaction control.

Optionally, presenting the presentation interface of the interaction information includes presenting the presentation interface of interaction information with a full-screen style, or includes presenting the presentation interface of interaction information and the first preset media content.

As shown in FIG. 5, after the user clicks the preset interaction control 505, the presentation interface 507 of interaction information with a full-screen style is presented.

For example, in case of the first preset media content is posted by the current user, and the current user is familiar with the work content posted by himself, therefore, when adding the comment or replying the comment, the specific content of the first preset media content may not be viewed at the same time, and the presentation interface of interaction information with the full-screen style may be presented, which may facilitate the current user to quickly view more interaction information, thereby facilitating the user to further interact, and improving the interaction efficiency.

Step 405: the interaction information satisfying the preset condition and is associated with the first preset media content is presented in the presentation interface of interaction information .

As shown in FIG. 5, the newly added comment information associated with the first preset media content may be presented in the presentation interface 507 of interaction information, and the target interaction control associated with the comment information may also be presented, for example, a reply button, to facilitate the current user to quickly reply to the comment content.

According to the method of information presentation provided by embodiments of the present disclosure, when the user views the preset information set at the preset interface, the user may quickly know whether the preset media content which the preview information belongs to is associated with the interaction information satisfying the preset condition or not by viewing the first prompt information presented in the preview information, and the presentation of the second prompt information is added in the associated area of the preset interaction control in the content presentation interface presented after the preview information is triggered, and the prompt effect is enhanced; after the user views the second prompt information, the presentation of the presentation interface of interaction information may be triggered in a manner of triggering the preset interaction control, so that the interaction information associated with the first preset media content may be viewed in the presentation interface of interaction information, and the user operation is reduced.

In some embodiments, the second prompt information may also be presented in the form of bullet comment information.

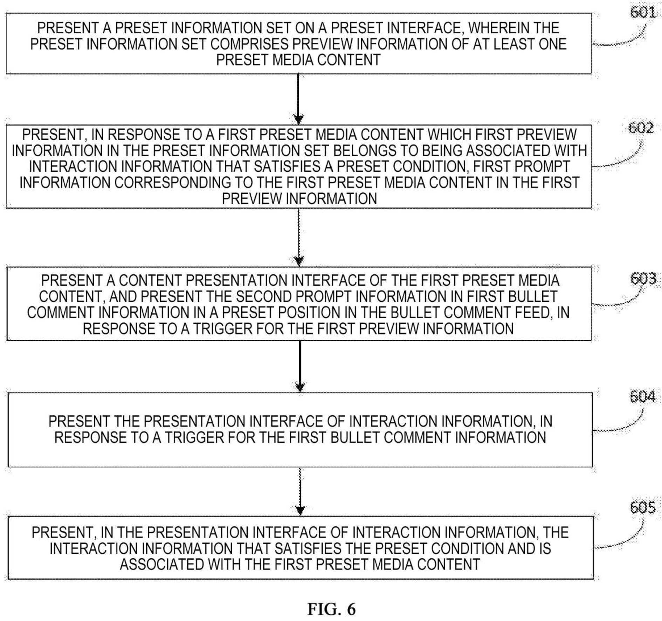

FIG. 6 is a schematic flowchart of yet another method of information presentation provided by embodiments of the present disclosure, and embodiments of the present disclosure are based on each optional solution of above embodiments, to further optimize the presentation of the second prompt information and the related interaction, specifically, the method includes the following steps:

Step 601: a preset information set is presented on a preset interface, where the preset information set includes preview information of at least one preset media content.

Step 602: in response to a first preset media content which first preview information in the preset information set belongs to being associated with interaction information satisfying a preset condition, first prompt information corresponding to the first preset media content is presented in the first preview information.

Step 603: a content presentation interface of the first preset media content is presented, and the second prompt information is presented in first bullet comment information at a preset position in the bullet comment feed, in response to a triggering operation on the first preview information.

Optionally, the presentation attribute of the first bullet comment information is different from the presentation attribute of the second bullet comment information, where the second bullet comment information includes bullet comment information in the bullet comment feed excluding the first bullet comment information. Therefore, the user may conveniently and quickly position the second prompt information, and the viewing efficiency of the second prompt information is improved.

As an example, the presentation attribute of the first bullet comment information being different from the presentation attribute of the second bullet comment information includes at least one of the following: a presentation duration of the first bullet comment information being greater than a presentation duration of the second bullet comment information; a presentation position of the first bullet comment information being fixed, and a presentation position of the second bullet comment information changing dynamically; a background color of the first bullet comment information being different from a background color of the second bullet comment information; and a text style of the first bullet comment information being different from a text style of the second bullet comment information.

For example, after presenting a period of time, one bullet comment information usually stops presenting, so as to present new bullet comment information, and in order to enhance the prompt effect, the presentation duration of the first bullet comment information may be set. The presentation process of one bullet comment information is usually dynamic, for example, it appears from the bottom of the bullet comment area and gradually rises and present at the top of the bullet comment area, in order to enhance the prompt effect, the presentation position of the first bullet comment information may be set to be fixed. The background color and/or the text style of the first bullet comment information is set to be different from the second bullet comment information, so that the presentation of the first bullet comment information is more highlighted which is facilitate improving the prompt effect.

Optionally, the first bullet comment information includes a preset number of user identifications of posting users of the interaction information satisfying the preset condition and is associated with the first preset media content. Therefore, the current user may conveniently and quickly view the interaction information is posted by which users from the first bullet comment information intuitively.

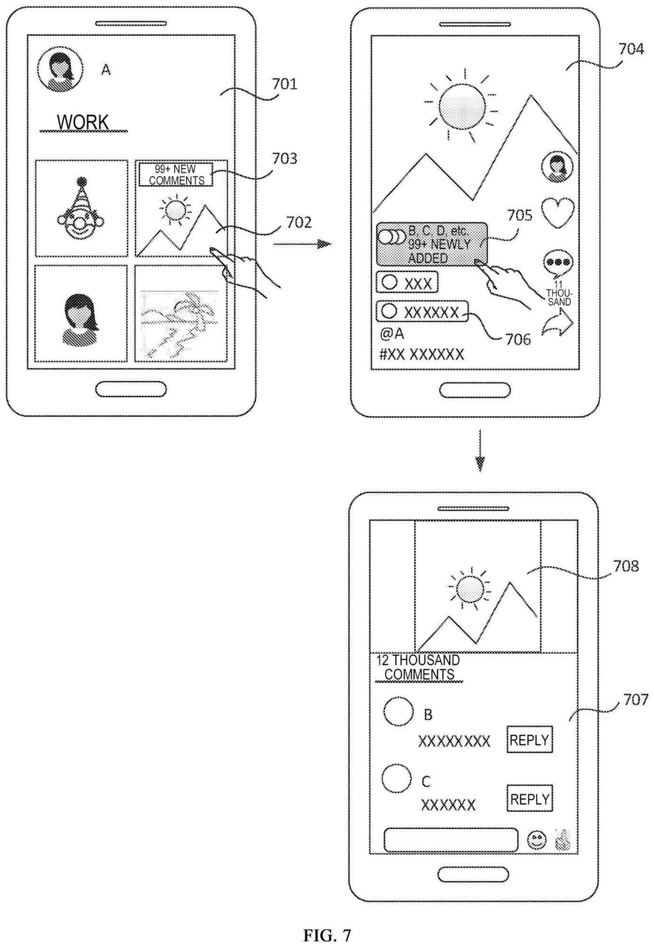

FIG. 7 is a schematic diagram of another interface interaction provided by embodiments of the present disclosure, and a preset information set is presented on the preset interface 701, and if the number of newly added comment information associated with the second work is the largest, the second work is determined as the first preset media content, and the corresponding work cover is determined as the first preview information 702, and the first prompt information 703 is presented in the first preview information 702. After the user clicks the first preview information 702, the user enters the content presentation interface 704, and the bottom-left area of the content presentation interface 704 is the bullet comment area, the bullet comment feed is presented in the bullet comment area, and the second prompt information is presented in the first bullet comment information 705 which is in the first position in the bullet comment feed. Compared with the second bullet comment information 706, the presentation duration of the first bullet comment information 705 is longer, the presentation position is fixed, and the background color is different, and the first bullet comment information further includes the user identifications (for example, the avatar) of the preset number of the posting user (3 in the figure) whose interaction information is associated with the first preset media content and satisfies the preset condition.

Step 604: the presentation interface of interaction information is presented, in response to a triggering operation on the first bullet comment information.

Optionally, presenting the presentation interface of interaction information includes presenting the presentation interface of interaction information with a full-screen style, or including presenting the presentation interface of interaction information and the first preset media content.

As shown in FIG. 7, after the user clicks the first bullet comment information 705, the presentation interface 707 of interaction information and the first preset media content 708 are presented.

Step 605: the interaction information satisfying the preset condition and is associated with the first preset media content is presented in the presentation interface of interaction information.

According to the method of information presentation provided by embodiments of the present disclosure, when the user views the preset information set at the preset interface, the user may quickly know whether the preset media content which the preview information belongs to is associated with the interaction information satisfying the preset condition or not by viewing the first prompt information presented in the preview information, and the presentation of the first bullet comment information including the second prompt information is added in the content presentation interface in the content presentation interface presented after the preview information is triggered, to enhance the prompt effect, and after the user views the first bullet comment information, the presentation of the presentation interface of interaction information may be triggered by a manner of triggering the first bullet comment information, so that the interaction information associated with the first preset media content may be viewed in the presentation interface of interaction information, and the user operation is reduced.

In some embodiments, after presenting the first prompt information corresponding to the first preset media content in the first preview information, the method further includes: presenting, in response to a triggering operation on the first preview information, a presentation interface of interaction information; presenting, in the presentation interface of interaction information, the interaction information satisfying the preset condition and is associated with the first preset media content. Therefore, after viewing the first prompt information, the user may directly enter the presentation interface of interaction information by triggering the first preview information to view the interaction information satisfying the preset condition, and further provide the viewing efficiency and the interaction efficiency of the interaction information.

For example, in case of the first preset media content is posted by the current user, the current user is familiar with the work content posted by himself, and the work content is generally known when viewing the first preview information, and therefore, it may not be necessary to enter the content presentation interface but directly enter the presentation interface of interaction information.

In some embodiments, presenting, in response to the triggering operation on the first preview information, the presentation interface of interaction information includes: presenting, in response to a triggering operation on the first preview information, the presentation interface of interaction information with a full-screen style; or presenting, in response to a triggering operation on the first preview information, the presentation interface of interaction information and the first preset media content. Therefore, the user may conveniently and quickly view the interaction information or perform further interaction based on the interaction information.

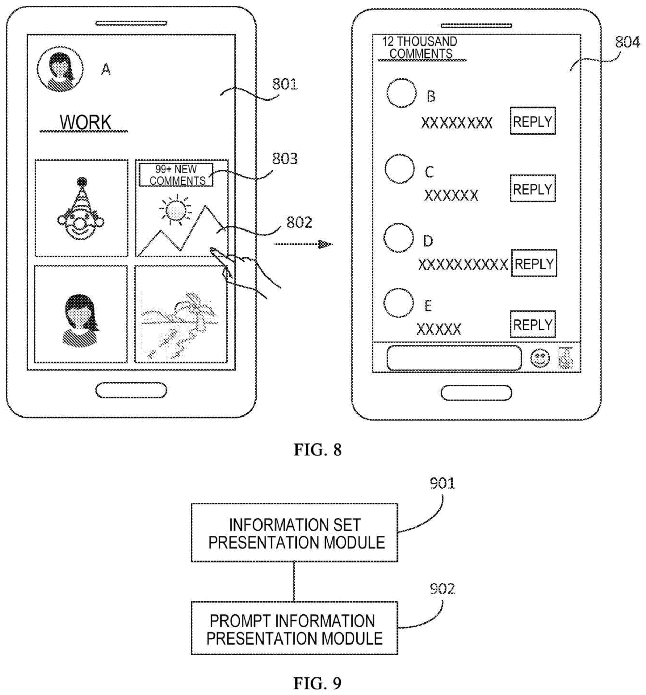

FIG. 8 is a schematic diagram of yet another interface interaction provided by embodiments of the present disclosure, as shown in FIG. 8, a preset information set is presented on a preset interface 801, the second work is the first preset media content, a corresponding work cover is first preview information 802, and first prompt information 803 is presented in the first preview information 802. After the user clicks the first preview information 802, the presentation interface 804 of interaction information is presented.

Optionally, the first prompt information is included in the target control, and in response to a triggering operation on the target control, the presentation interface of the interaction information is presented, and interaction information associated with the first preset media content and satisfying the preset condition is presented in the presentation interface of interaction information. In response to the triggering operation on the first preview information, the content presentation interface of the first preset media content is presented, or the second prompt information may be further presented in the content presentation interface.

FIG. 9 is a schematic diagram of a structure of an apparatus of information presentation provided by embodiments of the present disclosure, as shown in FIG. 9, the apparatus includes: an information set presentation module 901 configured to present a preset information set on a preset interface, wherein the preset information set comprises preview information of at least one preset media content; a prompt information presentation module 902 configured to present, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

The apparatus of information presentation provided by embodiments of the present disclosure presents the preset information set on the preset interface, and presents, in response to the first preset media content which first preview information in the preset information set belongs to being associated with interaction information satisfying a preset condition, first prompt information corresponding to the first preset media content in the first preview information, where the first prompt information is associated with the interaction information that is associated with the first preset media content. By adopting the technical scheme, when the user views the preset information set, the user may quickly know whether the preset media content which the preview information belongs to is associated with the interaction information satisfying the preset condition or not by viewing the prompt information presented in the preview information, so that the user operation is reduced.

Optionally, the at least one preset media content is posted by a current user.

Optionally, being associated with the interaction information satisfying the preset condition includes: being associated with newly added interaction information, and/or being associated with interaction information having an attribute feature satisfying a preset attribute requirement, wherein the newly added interaction information includes interaction information being added as compared with interaction information of the first preset media content being most recently viewed by a current user.

Optionally, the first prompt information includes indication information for indicating that the first preset media content is associated with the interaction information satisfying the preset condition, and/or the first prompt information comprises attribute feature information of the interaction information satisfying the preset condition and is associated with the first preset media content.

Optionally, presenting the first prompt information corresponding to the first preset media content in the first preview information includes: presenting first prompt information corresponding to the first preset media content at a target relative position in the first preview information, wherein preset information of a second preset media content which second preview information belongs to is presented at the target relative position in the second preview information, the second preview information comprising preview information in the preset information set excluding the first preview information.

Optionally, the apparatus further includes: a first presentation module, configured to after presenting the first prompt information corresponding to the first preset media content in the first preview information, present, in response to a triggering operation on the first preview information, a content presentation interface of the first preset media content; and a second presentation module, configured to present second prompt information in the content presentation interface, wherein the second prompt information is to prompt a current user to view the interaction information satisfying the preset condition associated with the first preset media content.

Optionally, a preset interaction control is presented in the content presentation interface to trigger presenting of a presentation interface of interaction information; wherein the second presentation module is specifically configured to: present the second prompt information in the content presentation interface includes: presenting second prompt information in an associated area of the preset interaction control.

Optionally, the apparatus further includes: a third presentation module, configured to after presenting the second prompt information in the associated area of the preset interaction control, present the presentation interface of interaction information with a full-screen style, or present the presentation interface of interaction information and the first preset media content, in response to a triggering operation on the preset interaction control; and a fourth presentation module configured to present, in the presentation interface of interaction information, the interaction information satisfying the preset condition and is associated with the first preset media content.

Optionally, a bullet comment feed is presented in the content presentation interface; wherein the second presentation module is specifically configured to: present the second prompt information in first bullet comment information at a preset position in the bullet comment feed.

Optionally, a presentation attribute of the first bullet comment information is different from a presentation attribute of second bullet comment information, wherein the second bullet comment information includes bullet comment information in the bullet comment feed excluding the first bullet comment information; and/or, the first bullet comment information includes a preset number of user identifications of posting users of the interaction information satisfying the preset condition and is associated with the first preset media content.

Optionally, the presentation attribute of the first bullet comment information being different from the presentation attribute of the second bullet comment information includes at least one of the following: a presentation duration of the first bullet comment information being greater than a presentation duration of the second bullet comment information; a presentation position of the first bullet comment information being fixed, and a presentation position of the second bullet comment information changing dynamically; a background color of the first bullet comment information being different from a background color of the second bullet comment information; and a text style of the first bullet comment information being different from a text style of the second bullet comment information.

Optionally, the apparatus further includes: a fifth presentation module, configured to after presenting the second prompt information in the first bullet comment information in the preset position in the bullet comment feed, present, in response to a triggering operation on the first bullet comment information, a presentation interface of interaction information; and a sixth presentation module, configured to present, in the presentation interface of interaction information, the interaction information satisfying the preset condition and is associated with the first preset media content.

Optionally, the second prompt information includes indication information for indicating that the first preset media content is associated with the interaction information satisfying the preset condition, and/or the second prompt information includes attribute information of the interaction information satisfying the preset condition and is associated with the first preset media content.

Optionally, the apparatus further includes: a seventh presentation module, configured to after presenting the first prompt information corresponding to the first preset media content in the first preview information, present, in response to a triggering operation on the first preview information, a presentation interface of interaction information; and an eighth presentation module, configured to present, in the presentation interface of interaction information, the interaction information satisfying the preset condition and is associated with the first preset media content.

Optionally, the seventh presentation module is specifically configured to: present, in response to a triggering operation on the first preview information, the presentation interface of interaction information with a full-screen style; or present, in response to a triggering operation on the first preview information, the presentation interface of interaction information and the first preset media content.

The apparatus of information presentation provided by embodiments of the present disclosure may perform the method of information presentation provided by any embodiment of the present disclosure, and has functional modules and beneficial effects corresponding to the execution method.

It should be noted that the units and modules included in the foregoing apparatus are only divided according to the function logic, but are not limited to the foregoing division, as long as the corresponding functions can be implemented; in addition, the specific names of the various functional units are merely for ease of distinguishing, and are not intended to limit the protection scope of embodiments of the present disclosure.

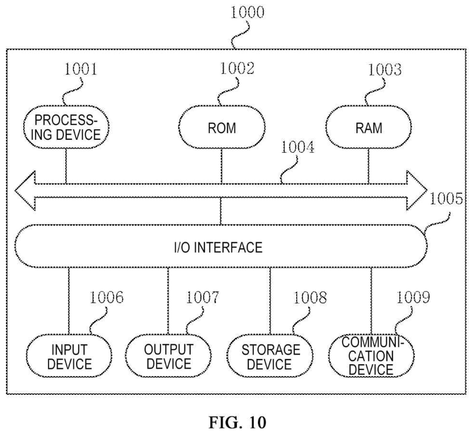

FIG. 10 is a schematic diagram of structure of an electronic device provided by embodiments of the present disclosure. Referring to FIG. 10, FIG. 10 illustrates a schematic diagram of structure of an electronic device 1000 (such as the terminal device or server in FIG. 10) suitable for implementing embodiments of the present disclosure. The terminal device in embodiments of the present disclosure may include, but are not limited to, mobile terminals such as mobile phones, notebook computers, digital broadcast receivers, PDA (personal digital assistant), PAD (portable Android device), PMP (portable multimedia player), vehicle-mounted terminals (such as vehicle-mounted navigation terminals), etc., as well as fixed terminals such as digital television (TV), desktop computers, etc. The electronic device shown in FIG. 10 is only an example, and should not limit the function and using scope of embodiments of the present disclosure.

As shown in FIG. 10, the electronic device 1000 may include a processing device (such as a central processing unit, a graphics processing unit, or the like) 1001 that may perform various appropriate actions and processing according to a program stored in a read only memory (ROM) 1002 or a program loaded from a storage device 1008 into a random access memory (RAM) 1003. In the RAM 1003, various programs and data required for operation of the electronic device 1000 are further stored. The processing device 1001, the ROM 1002, and the RAM 1003 are connected to each other by using a bus 1004. An edit/output (I/O) interface 1005 is also connected to the bus 1004.

Generally, the following devices may be connected to the I/O interface 1005: input device 1006 including, for example, a touchscreen, a touchpad, a keyboard, a mouse, a camera, a microphone, an accelerometer, and a gyroscope; output device 1007 including, for example, a liquid crystal display (LCD), a loudspeaker and a vibrator; storage device 1008 including, for example, a tape or a hard disk; and a communication device 1009. The communication device 1009 may allow the electronic device 1000 to communicate wirelessly or wired with another device to exchange data. Although FIG. 10 illustrates an electronic device 1000 with various devices, it should be understood that it is not required to implement or provide all shown devices. Alternatively, more or fewer devices may be implemented or provided.

In particular, according to embodiments of the present disclosure, the process described above with reference to the flowchart may be implemented as a computer software program. For example, an embodiment of the present disclosure includes a computer software program product that includes a computer program carried on a non-transitory computer readable medium, and the computer program includes program codes used to perform the methods shown in the flowchart. In such an embodiment, the computer program may be downloaded and installed from a network by using the communications device 1009, or installed from the storage device 1008, or installed from the ROM 1002. When the computer program is executed by the processing device 1001, the foregoing functions defined in the method in embodiments of the present disclosure are executed.

The names of messages or information exchanged between multiple apparatuses in embodiments of the present disclosure are for illustrative purposes only and are not used to limit the scope of these messages or information.

The electronic device provided by embodiments of the present disclosure and the method of information presentation provided in foregoing embodiments belong to the same inventive concept, technical details not described in detail in this embodiment may refer to the foregoing embodiments, and this embodiment has the same beneficial effects as the foregoing embodiments..

Embodiments of the present disclosure provides a computer storage medium having a computer program stored thereon, and the program, when executed by a processor, implements the method of information presentation provided in foregoing embodiments.

Embodiments of the present disclosure provide a computer program product, including a computer program that, when executed by a processor, implement the method of information presentation provided in foregoing embodiments.

It should be noted that the foregoing computer-readable medium in the present disclosure may be a computer-readable signal medium, a computer-readable storage medium, or any combination of the two. The computer-readable storage medium may be, for example, an electrical, magnetic, optical, electromagnetic, infrared, or semiconductor system, apparatus, or means, or any combination thereof. More specific examples of the computer-readable storage medium may include but are not limited to: an electrical connection having one or more conducting wires, a portable computer disk, a hard disk, a random-access memory (RAM), a read-only memory (ROM), an erasable programmable read only memory (EPROM or flash memory), an optical fiber, a portable compact disk read only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus, or means. In addition, in the present disclosure, the computer-readable signal medium may include a data signal propagated in a baseband or as a part of a carrier, which carries computer-readable program codes. Such a propagated data signal may be in multiple forms, including but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or means. The program code included in the computer-readable medium may be transmitted by using any suitable medium, including but not limited to: a wire, an optical cable, radio frequency (RF), or any suitable combination thereof.

In some implementations, the client and the server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ("WANs"), internets (e.g., the Internet), and peer-to-peer networks (e.g., ad hoc peer-to-peer networks), as well as any currently known or future developed networks.

The foregoing computer-readable medium may be included in the foregoing electronic device; it may also exist separately without being assembled into the electronic device.

The foregoing computer-readable medium carries one or more programs, when the foregoing one or more programs are executed by the electronic device, causing the electronic device to: present a preset information set on a preset interface, wherein the preset information set includes preview information of at least one preset media content; present, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

Computer program codes for performing the operations of the present disclosure may be written in one or more programming languages or a combination thereof, including but not limited to object oriented programming languages, such as Java, Smalltalk, C++, and conventional procedural programming languages such as "C" or similar program design languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

The flowcharts and block diagrams in the accompanying drawings illustrate possible architectures, functions, and operations of systems, methods, and computer program products according to various embodiments of the present disclosure. In this regard, each block in a flowchart or block diagram may represent a module, program segment, or part of code that includes one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that performs a specified function or operation, or may be implemented by using a combination of dedicated hardware and a computer instruction.

The units involved in embodiments described in the present disclosure may be implemented either by means of software or by means of hardware. The names of the modules do not limit the modules themselves under certain circumstances, for example, the information set presentation module may be further described as "module for presenting a preset information set on a preset interface".

The functions described above herein may be performed, at least in part, by one or more hardware logic components. For example, and without limitation, example types of hardware logic components that may be used include: field programmable gate arrays (FPGAs), application specific integrated circuits (ASICs), application specific standard product (ASSP), systems on a chip (SOC), complex programmable logical device (CPLD) and so on.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. Machine-readable media may include, but are not limited to, electronic, magnetic, optical, electromagnetic, infrared, or semiconductor systems, apparatus or device, or any suitable combination of the foregoing. More specific examples of machine-readable storage media may include electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, there is provided a method of information presentation, including: presenting a preset information set on a preset interface, wherein the preset information set comprises preview information of at least one preset media content; presenting, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

According to one or more embodiments of the present disclosure, the at least one preset media content is posted by a current user.

According to one or more embodiments of the present disclosure, being associated with the interaction information satisfying the preset condition includes: being associated with newly added interaction information, and/or being associated with interaction information having an attribute feature satisfying a preset attribute requirement, wherein the newly added interaction information includes interaction information being added as compared with interaction information of the first preset media content being most recently viewed by a current user.

According to one or more embodiments of the present disclosure, the first prompt information includes indication information for indicating that the first preset media content is associated with the interaction information satisfying the preset condition, and/or the first prompt information comprises attribute feature information of the interaction information satisfying the preset condition and is associated with the first preset media content.

According to one or more embodiments of the present disclosure, presenting the first prompt information corresponding to the first preset media content in the first preview information includes: presenting first prompt information corresponding to the first preset media content at a target relative position in the first preview information, wherein preset information of a second preset media content which second preview information belongs to is presented at the target relative position in the second preview information, the second preview information comprising preview information in the preset information set excluding the first preview information.

According to one or more embodiments of the present disclosure, after presenting the first prompt information corresponding to the first preset media content in the first preview information, the method further includes: presenting, in response to a triggering operation on the first preview information, a content presentation interface of the first preset media content; presenting second prompt information in the content presentation interface, wherein the second prompt information is to prompt a current user to view the interaction information satisfying the preset condition associated with the first preset media content.

According to one or more embodiments of the present disclosure, a preset interaction control is presented in the content presentation interface to trigger presenting of a presentation interface of interaction information; wherein presenting the second prompt information in the content presentation interface includes: presenting second prompt information in an associated area of the preset interaction control.

According to one or more embodiments of the present disclosure, after presenting the second prompt information in the associated area of the preset interaction control, the method further includes: presenting the presentation interface of interaction information with a full-screen style, or presenting the presentation interface of interaction information and the first preset media content, in response to a triggering operation on the preset interaction control; presenting, in the presentation interface of interaction information, the interaction information satisfying the preset condition and is associated with the first preset media content.

According to one or more embodiments of the present disclosure, a bullet comment feed is presented in the content presentation interface; wherein presenting the second prompt information in the content presentation interface includes: presenting the second prompt information in first bullet comment information at a preset position in the bullet comment feed.

According to one or more embodiments of the present disclosure, a presentation attribute of the first bullet comment information is different from a presentation attribute of second bullet comment information, wherein the second bullet comment information includes bullet comment information in the bullet comment feed excluding the first bullet comment information; and/or, the first bullet comment information includes a preset number of user identifications of posting users of the interaction information satisfying the preset condition and is associated with the first preset media content.

According to one or more embodiments of the present disclosure, the presentation attribute of the first bullet comment information being different from the presentation attribute of the second bullet comment information includes at least one of the following: a presentation duration of the first bullet comment information being greater than a presentation duration of the second bullet comment information; a presentation position of the first bullet comment information being fixed, and a presentation position of the second bullet comment information changing dynamically; a background color of the first bullet comment information being different from a background color of the second bullet comment information; and a text style of the first bullet comment information being different from a text style of the second bullet comment information.

According to one or more embodiments of the present disclosure, after presenting the second prompt information in the first bullet comment information in the preset position in the bullet comment feed, the method further includes: presenting, in response to a triggering operation on the first bullet comment information, a presentation interface of interaction information; presenting, in the presentation interface of interaction information, the interaction information satisfying the preset condition and is associated with the first preset media content.

According to one or more embodiments of the present disclosure, the second prompt information includes indication information for indicating that the first preset media content is associated with the interaction information satisfying the preset condition, and/or the second prompt information includes attribute information of the interaction information satisfying the preset condition and is associated with the first preset media content.

According to one or more embodiments of the present disclosure, after presenting the first prompt information corresponding to the first preset media content in the first preview information, the method further includes: presenting, in response to a triggering operation on the first preview information, a presentation interface of interaction information; presenting, in the presentation interface of interaction information, the interaction information satisfying the preset condition and is associated with the first preset media content.

According to one or more embodiments of the present disclosure, presenting, in response to the triggering operation on the first preview information, the presentation interface of interaction information includes: presenting, in response to a triggering operation on the first preview information, the presentation interface of interaction information with a full-screen style; or presenting, in response to a triggering operation on the first preview information, the presentation interface of interaction information and the first preset media content.

According to one or more embodiments of the present disclosure, an apparatus of information presentation is provided, including: an information set presentation module configured to present a preset information set on a preset interface, wherein the preset information set comprises preview information of at least one preset media content; a prompt information presentation module configured to present, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

According to one or more embodiments of the present disclosure, an electronic device is provided, and the electronic device includes: one or more processors; a storage device configured to store one or more programs, the one or more programs, when executed by the one or more processors, causing the one or more processors to implement the method of information presentation provided by embodiments of the present disclosure.

According to one or more embodiments of the present disclosure, there is provided a storage medium including computer-executable instructions that, when executed by a computer processor, are configured to perform the method of information presentation provided by embodiments of the present disclosure.

The above description is only embodiments of the present disclosure and an illustration of the technical principles utilized. It should be understood by those skilled in the art that the scope of disclosure involved in the present disclosure is not limited to technical solutions formed by a particular combination of the above technical features, but also covers other technical solutions formed by any combination of the above technical features or their equivalent features without departing from the above disclosed concept, for example, a technical solution formed by interchanging the above features with (but not limited to) technical features with similar functions disclosed in the present disclosure.

Further, although the operations are depicted using a particular order, this should not be construed as requiring that the operations be performed in the particular order shown or in sequential order of execution. Multitasking and parallel processing may be advantageous in certain environments. Similarly, while several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments, either individually or in any suitable sub-combination.

Although the present subject has been described using language specific to structural features and/or method logical actions, it should be understood that the subject limited in the appended claims is not necessarily limited to the particular features or actions described above. Rather, the particular features and actions described above are merely example forms of implementing the claims.

## Claims

1. A method of information presentation, comprising:
presenting a preset information set on a preset interface, wherein the preset information set comprises preview information of at least one preset media content;
presenting, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

2. The method of claim 1, wherein the at least one preset media content is posted by a current user.

3. The method of claim 1, wherein being associated with the interaction information satisfying the preset condition comprises: being associated with newly added interaction information, and/or being associated with interaction information having an attribute feature satisfying a preset attribute requirement, wherein the newly added interaction information comprises interaction information being added as compared with interaction information of the first preset media content being most recently viewed by a current user.

4. The method of claim 1, wherein the first prompt information comprises indication information for indicating that the first preset media content is associated with the interaction information satisfying the preset condition, and/or the first prompt information comprises attribute feature information of the interaction information satisfying the preset condition and is associated with the first preset media content.

5. The method of claim 1, wherein presenting the first prompt information corresponding to the first preset media content in the first preview information comprises:
presenting first prompt information corresponding to the first preset media content at a target relative position in the first preview information, wherein preset information of a second preset media content which second preview information belongs to is presented at the target relative position in the second preview information, the second preview information comprising preview information in the preset information set excluding the first preview information.

6. The method of claim 1, wherein after presenting the first prompt information corresponding to the first preset media content in the first preview information, the method further comprises:
presenting, in response to a triggering operation on the first preview information, a content presentation interface of the first preset media content;
presenting second prompt information in the content presentation interface, wherein the second prompt information is to prompt a current user to view the interaction information satisfying the preset condition associated with the first preset media content.

7. The method of claim 6, wherein a preset interaction control is presented in the content presentation interface to trigger presenting of a presentation interface of interaction information;
wherein presenting the second prompt information in the content presentation interface comprises:
presenting second prompt information in an associated area of the preset interaction control.

8. The method of claim 7, wherein after presenting the second prompt information in the associated area of the preset interaction control, the method further comprises:
presenting the presentation interface of interaction information with a full-screen style, or presenting the presentation interface of interaction information and the first preset media content, in response to a triggering operation on the preset interaction control;
presenting, in the presentation interface of interaction information, the interaction information satisfying the preset condition and is associated with the first preset media content.

9. The method of claim 6, wherein a bullet comment feed is presented in the content presentation interface;
wherein presenting the second prompt information in the content presentation interface comprises:
presenting the second prompt information in first bullet comment information at a preset position in the bullet comment feed.

10. The method of claim 9, wherein a presentation attribute of the first bullet comment information is different from a presentation attribute of second bullet comment information, wherein the second bullet comment information comprises bullet comment information in the bullet comment feed excluding the first bullet comment information; and/or, the first bullet comment information comprises a preset number of user identifications of posting users of the interaction information satisfying the preset condition and is associated with the first preset media content.

11. The method of claim 10, wherein the presentation attribute of the first bullet comment information being different from the presentation attribute of the second bullet comment information comprises at least one of the following:
a presentation duration of the first bullet comment information being greater than a presentation duration of the second bullet comment information;
a presentation position of the first bullet comment information being fixed, and a presentation position of the second bullet comment information changing dynamically;
a background color of the first bullet comment information being different from a background color of the second bullet comment information; and
a text style of the first bullet comment information being different from a text style of the second bullet comment information.

12. The method of claim 10, wherein after presenting the second prompt information in the first bullet comment information in the preset position in the bullet comment feed, the method further comprises:
presenting, in response to a triggering operation on the first bullet comment information, a presentation interface of interaction information;
presenting, in the presentation interface of interaction information, the interaction information satisfying the preset condition and is associated with the first preset media content.

13. The method of any of claims 6-12, wherein the second prompt information comprises indication information for indicating that the first preset media content is associated with the interaction information satisfying the preset condition, and/or the second prompt information comprises attribute information of the interaction information satisfying the preset condition and is associated with the first preset media content.

14. The method of claim 1, wherein after presenting the first prompt information corresponding to the first preset media content in the first preview information, the method further comprises:
presenting, in response to a triggering operation on the first preview information, a presentation interface of interaction information;
presenting, in the presentation interface of interaction information, the interaction information satisfying the preset condition and is associated with the first preset media content.

15. The method of claim 14, wherein presenting, in response to the triggering operation on the first preview information, the presentation interface of interaction information comprises:
presenting, in response to a triggering operation on the first preview information, the presentation interface of interaction information with a full-screen style; or
presenting, in response to a triggering operation on the first preview information, the presentation interface of interaction information and the first preset media content.

16. An apparatus of information presentation, comprising:
an information set presentation module configured to present a preset information set on a preset interface, wherein the preset information set comprises preview information of at least one preset media content;
a prompt information presentation module configured to present, in response to a first preset media content which first preview information in the preset information set belongs to being associated with interaction information satisfying a preset condition, first prompt information corresponding to the first preset media content in the first preview information, wherein the first prompt information is associated with the interaction information that is associated with the first preset media content.

17. An electronic device, comprising:
one or more processors;
a storage device configured to store one or more programs,
the one or more programs, when executed by the one or more processors, causing the one or more processors to implement the method of information presentation of any of claims 1-15.

18. A storage medium comprising computer-executable instructions that, when executed by a computer processor, are configured to perform the method of information presentation of any of claims 1-15.
